# FASCICULE DE BREVET EUROPEEN

(11) **EP 0 396 454 B1**
(45) Date de publication et mention de la délivrance du brevet: **29.06.1994**
(21) Numéro de dépôt: 90401123.6
(22) Date de dépôt: 25.04.1990
(51) Int. Cl.: G02B 7/24

(54) **Articulation en joint de cardan à la jonction de deux arbres creux concourants parcourus par un faisceau lumineux**
Kreuzgelenk für die Verbindung zweier lichtübertragender Gelenkwellen
Universal joint for the joining of two shafts through which a beam of light is passed

(30) Priorité: 02.05.1989 FR 8905791
(43) Date de publication de la demande: 07.11.1990
(73) Titulaire: COMMISSARIAT A L'ENERGIE ATOMIQUE, 75015 Paris Cédex 15 (FR)
(72) Inventeur: Alfille, Jean-Pascal, F-92140 Clamart (FR); Dobler, Roger, F-94170 Le Perreux sur Marne (FR); Richet, André, F-78320 La Verriere (FR)
(74) Mandataire: Dubois-Chabert, Guy

(56) Documents cités:
- DE-A- 3 117 254
- FR-A- 2 528 187
- US-A- 3 658 406

## Description

L'invention concerne une articulation en joint de cardan à la jonction de deux arbres creux concourants parcourus par un faisceau lumineux.

De nombreux types d'articulations ont été proposés pour être disposés le long de bras de robots parcourus par un faisceau lumineux. Des miroirs sont disposés dans ces articulations pour réfléchir le faisceau entre l'arbre amont et l'arbre aval. Un exemple de réalisation est exposé dans le document FR-A- 2 528 187.

Toutefois, on ne connaît pas actuellement dans ce domaine technique d'articulations utilisant le principe du joint de cardan qui possède pourtant de nombreux avantages tels que la compacité, la robustesse et une grande précision due aux jeux réduits. Ce manque d'intérêt doit sans doute être attribué au fait que, dans les joints de cardan classiques utilisés notamment en automobile, chacun des arbres bifurque pour former une fourche articulée sur une branche respective d'un croisillon ; les deux branches du croisillon correspondent aux axes de rotation du joint de cardan. Une telle disposition accumule les pièces mécaniques dans la zone environnant le point de concours de ces deux axes de rotation, si bien que le faisceau lumineux doit être dévié pour passer à l'écart de cette zone. Un nombre assez important de miroirs serait nécessaire pour produire les déviations successives, ce qui causerait une perte sensible d'énergie lumineuse.

L'objet fondamental de l'invention est donc d'adapter des joints de cardan connus à des arbres creux de façon à permettre une propagation du faisceau lumineux dans les arbres avec des moyens techniques réduits et en n'utilisant notamment que deux miroirs, tout en conservant les avantages traditionnels des joints de cardan. Il faut remarquer que le brevet US-A-3 658 406 décrit une rotule ("joint universel") apte à la transmission d'un faisceau laser mais qui n'offre ni la précision mécanique de l'invention ni ses possibilités de débattement angulaire.

L'articulation constitutive de l'invention comprend donc au moins :
- une première fourche fixée à premier arbre ;
- une charnière pivotant dans la première fourche suivant un premier axe de rotation du cardan ;
- une seconde fourche pivotant sur le second arbre suivant le second axe de rotation du cardan, la charnière pivotant également dans la seconde fourche ;
- un premier miroir fixé à la charnière, disposé selon la bissectrice extérieure d'un premier angle constitué par le second axe de rotation du cardan et l'axe de propagation du faisceau dans le premier arbre ;
- un mécanisme de transmission pour faire tourner la charnière d'angles égaux à la moitié des angles de rotation de la première fourche et du premier arbre autour du premier axe de rotation du cardan, et maintenir ainsi la normale à la surface réfléchissante du premier miroir suivant la bissectrice intérieure du premier angle ;
- un second miroir fixé au second arbre, disposé selon la bissectrice extérieure d'un second angle constitué par le second axe de rotation du cardan et l'axe de propagation du faisceau dans le second arbre, la normale à la surface réfléchissante du second miroir étant orientée suivant la bissectrice intérieure du second angle.

Avantageusement, le second bras comprend une partie en palier recevant un pivot de la seconde fourche, le pivot est coaxial au second axe de rotation et le premier miroir est disposé entre le pivot et le second miroir.

On va maintenant décrire l'invention plus en détail à l'aide des figures suivantes annexées à titre illustratif et nullement limitatif :
- la figure 1 représente schématiquement une première réalisation de l'invention ;
- la figure 2 est un agrandissement d'une partie de la figure 1 ;
- la figure 3 représente un détail de la première réalisation de l'invention ;
- les figures 4 et 5 représentent une solution technique possible de la première réalisation de l'invention ;
- la figure 6 représente une seconde réalisation de l'invention ; et
- la figure 7 représente une utilisation possible de l'invention.

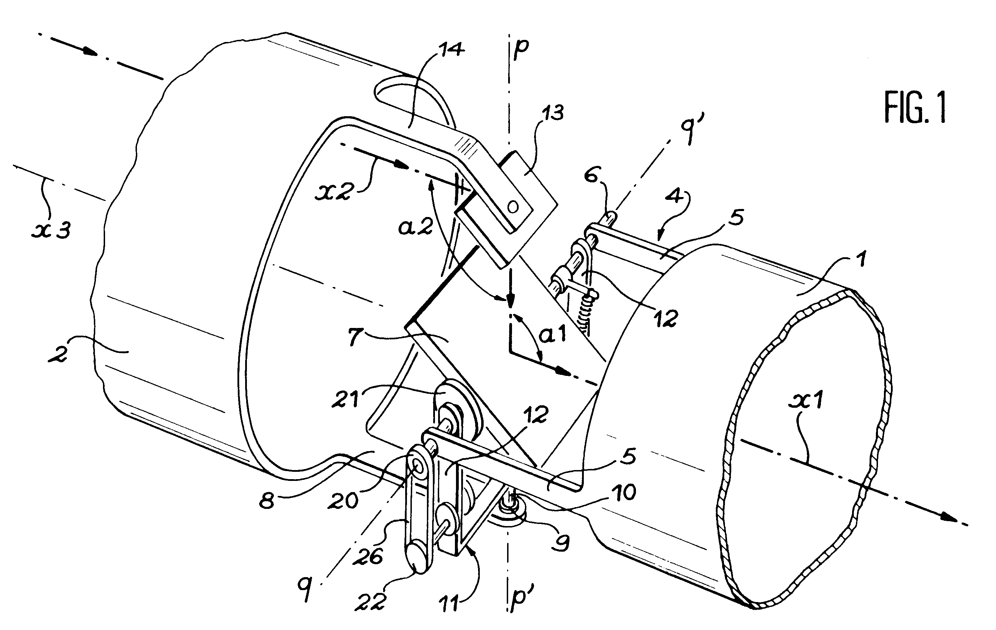

La figure 1 représente un premier arbre 1 et un second arbre 2, tous deux creux et parcourus par un faisceau lumineux passant par un premier axe de propagation x₁ dans le premier arbre 1 et un second axe de propagation x₂ dans le second arbre 2. Le premier axe de propagation x₁ correspond à l'axe du premier arbre 1 alors que le second axe de propagation x₂ est parallèle à l'axe x₃ du second arbre 2.

Une première fourche 4 rigide est constituée de deux branches parallèles 5 encastrées à l'extrémité du premier arbre 1. Une charnière 6 est disposée dans des évidements aux extrémités des branches 5 et peut pivoter dans ces évidements. Un premier miroir, plan, 7 est lié à la charnière 6 entre les branches 5. La charnière 6 matérialise le premier axe de rotation du cardan qq′, qui est également tangent à la surface réfléchissante du miroir 7.

Le second arbre 2 est prolongé par un appendice inférieur 8 dont l'extrémité porte un palier 9 de réception d'un pivot 10. Le pivot 10 appartient à une seconde fourche 11 rigide qui se compose également de deux branches parallèles 12, fixées au pivot 10, et dont l'extrémité opposée comprend, comme pour la première fourche 4, les évidements dans lesquels la charnière 6 a été introduite et peut pivoter.

Le pivot 10 peut pivoter dans le palier 9 autour du second axe de rotation du cardan pp′. Cet axe est sécant avec le premier axe de rotation du cardan qq′ et lui est perpendiculaire ; il traverse la surface réfléchissante du premier miroir 7 ainsi que la surface réfléchissante d'un second miroir, plan, 13 fixé au second arbre 2 par un appendice supérieur 14.

La disposition géométrique des deux miroirs 7 et 13 assure une double réflexion faisant passer le faisceau lumineux d'un premier axe de propagation x₂ (ou x₁) à l'autre axe de propagation x₁ ou (x₂) par la portion du second axe de rotation du cardan pp′ délimitée par les surfaces réfléchissantes des deux miroirs 7 et 13. La surface réfléchissante du second miroir 13 est donc située selon la bissectrice extérieure d'un second angle a₂, qui est un angle droit dans la réalisation représentée, défini par le second axe de propagation x₂ et le second axe de rotation du cardan pp′ ; la normale à la surface réfléchissante du second miroir 13 correspond à la bissectrice du second angle a₂.

Des conditions analogues concernent le premier miroir 7 : il est disposé selon la bissectrice extérieure d'un premier angle a₁ délimité par le second axe de rotation du cardan pp′ et le premier axe de propagation x₁, et la normale à sa surface réfléchissante constitue la bissectrice intérieure de ce premier angle a₁. Le premier angle a₁ est toutefois variable suivant les mouvements de l'axe qq′ du cardan, si bien qu'un mécanisme doit être ajouté au dispositif pour permettre d'asservir la position du premier miroir 7.

Ce mécanisme va maintenant être décrit, mais on remarquera auparavant que le premier miroir 7 s'étend entre le second miroir 13 et le pivot 10. Cette disposition permet une bonne compacité du joint de cardan et une bonne précision car les axes x₁ et x₃ des deux arbres 1 et 3 sont coucourants entre eux et sont également concourants avec les deux axes de rotation du cardan pp′ et qq′, alors que dans les conceptions connues les articulations sont échelonnées sur la ligne d'arbre et utilisent des arbres en porte-à-faux dont la morphologie et les mouvements sont plus compliqués.

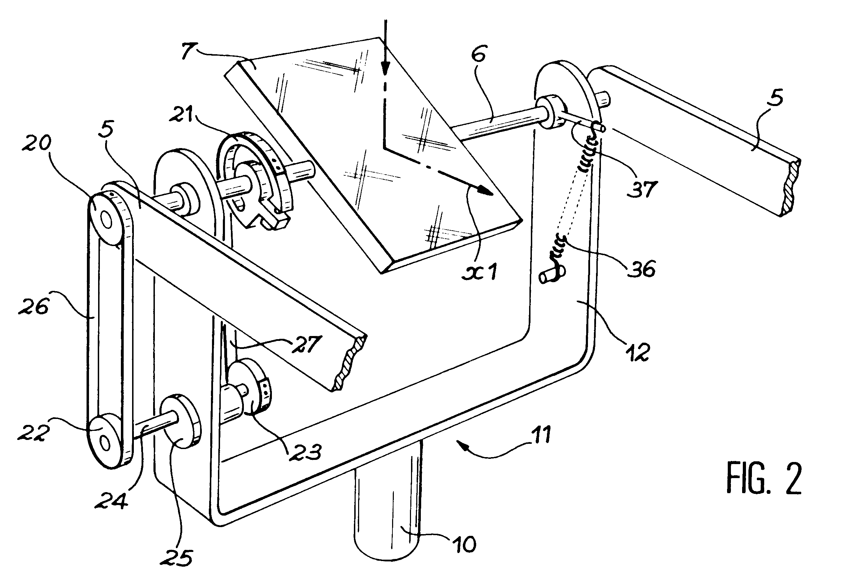

La figure 2 montre qu'une poulie menante 20 est fixée à une des branches 5 de la première fourche 4 coaxialement à la charnière 6. Une poulie menée 21 est par ailleurs fixée à la charnière 6, et deux poulies de renvoi 22 et 23 sont fixées à un arbre de renvoi 24 parallèle à la charnière 6 et pivotant dans une rondelle 25. Cette dernière peut elle-même être déplacée en rotation dans un évidement d'une des branches 12 de la seconde fourche 11 dans lequel elle a été introduite avec un léger serrage. Comme la rondelle 25 et l'arbre de renvoi 24 ne sont pas coaxiaux, la rondelle 25 correspond donc à un palier excentrique dont la rotation dans la branche 12 déplace transversalement l'arbre de renvoi 24.

La poulie menante 20 et une des poulies de renvoi 22 sont réunies par une lame métallique continue 26 et la poulie menée 21 et l'autre poulie de renvoi 23 sont réunies par une lame métallique discontinue 27. La tension des lames 26 et 27 est assurée par la rotation de la rondelle 25 et par le couple ressort 36-levier 37.

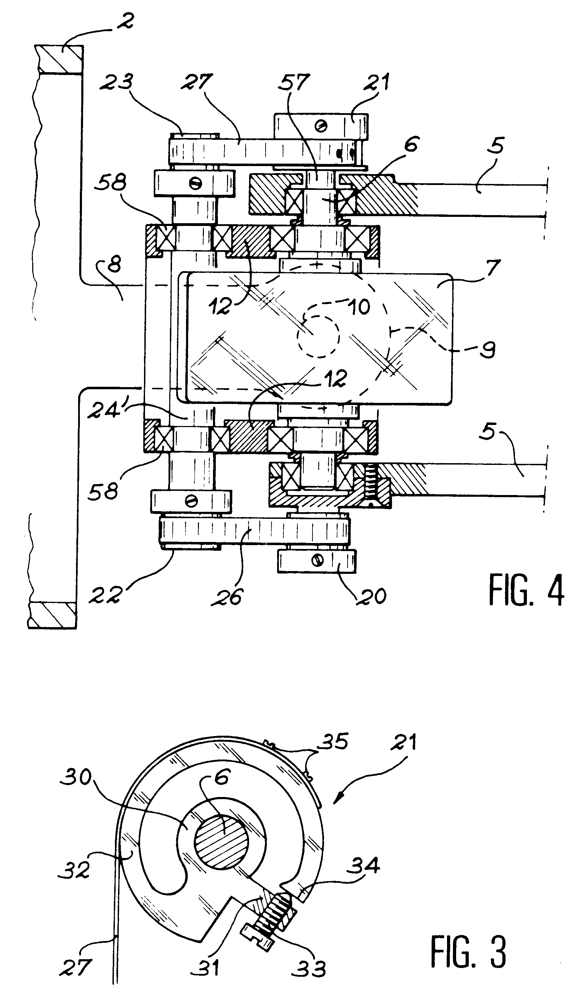

La poulie menée 21 est représentée plus en détail sur la figure 3. Elle se compose d'un noyau 30 formant un moyeu, engagé sur la charnière 6, d'une console 31 et d'un flanc 32 tous deux encastrés par une extrémité dans le noyau 30.

Une vis de pression 33 est engagée dans un taraudage de la console 31. Sa pointe vient au contact de l'extrémité libre 34 du flanc 32, qui peut ainsi être déformé en déplaçant la vis de pression 33.

La lame métallique discontinue 27 a une extrémité fixée par des vis de blocage 35 au flanc 32 et son autre extrémité est fixée de manière analogue à la poulie de renvoi 23. Les emplacements des vis de pression 33 et de blocage 35 sont disposés de sorte que les déformations du flanc 32 provoquées par la vis de pression 33 se traduisent par des déplacements à peu près purement radiaux et uniformes dans la zone du flanc 32 proche des vis de fixation 35. On peut donc considérer que la poulie menée 21 fonctionne comme une poulie à diamètre variable, ce qui permet de la régler de façon que la transmission composée des quatre poulies et des lames métalliques communique à la charnière 6 et au premier miroir 7 des rotations égales à la moitié des rotations de la première fourche 4. La normale à la surface réfléchissante du premier miroir 7 est ainsi maintenue suivant la bissectrice du premier angle a₁.

On revient à la figure 2 pour constater qu'un ressort de rappel 36 est tendu entre la seconde fourche 11 et un levier 37 solidaire de la charnière 6 pour maintenir la lame métallique 27 discontinue tendue et le premier miroir 7 dans la position angulaire voulue.

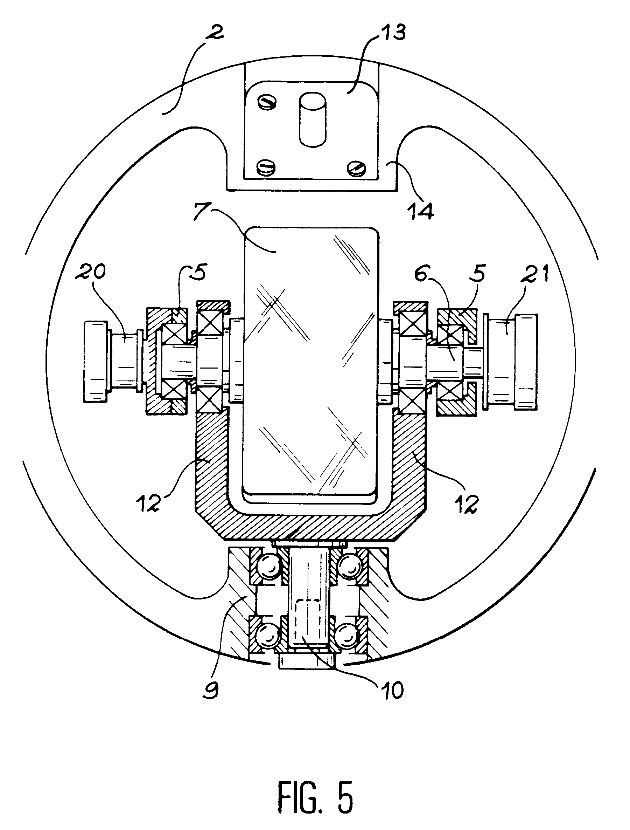

La figure 2 représente une réalisation dans laquelle les quatre poulies sont du même côté du premier miroir 7, de part et d'autre d'une des branches 12 de la seconde fourche 11. Une autre réalisation, dans laquelle les détails d'exécution technique ont été davantage détaillés, est par ailleurs représentée figures 4 et 5 et montre que la poulie menée 21 peut être montée sur l'extrémité 57 de la charnière 6 la plus éloignée de la poulie menante 20. L'arbre de renvoi, référencé ici 24′, est alors soutenu par deux paliers 58 pratiqués dans les branches 12 de la seconde fourche 11. Une répartition presque symétrique des poulies par rapport au premier miroir 7 est ainsi obtenue.

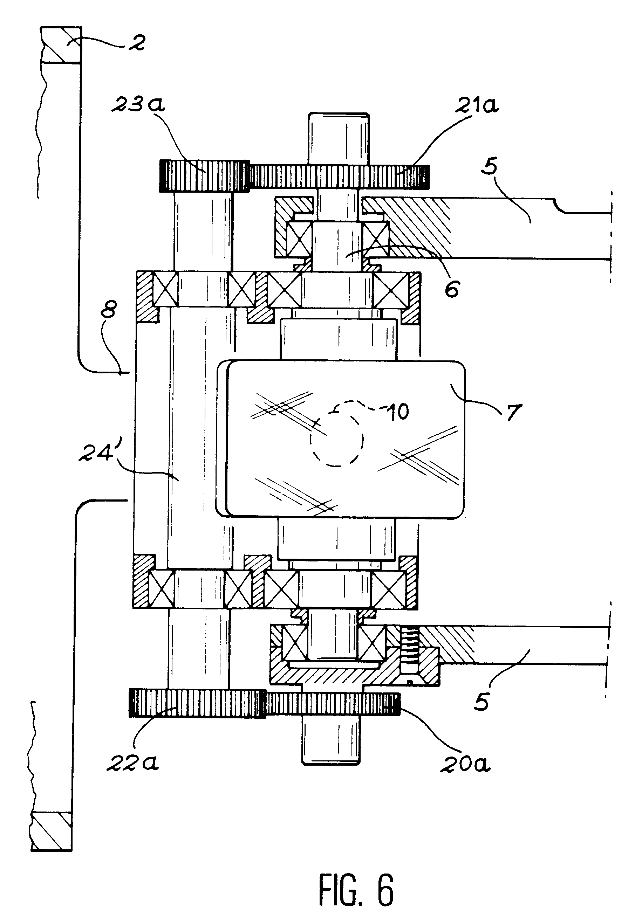

Une réalisation équivalente, représentée figure 6, consiste à remplacer les poulies par des engrenages. La poulie menante 20 et une poulie de renvoi 22 sont remplacées par deux roues dentées 20a et 22a s'engrenant alors que la seconde poulie de renvoi 23 et la poulie menée 21 sont de même remplacées par deux roues dentées 23a et 21a s'engrenant.

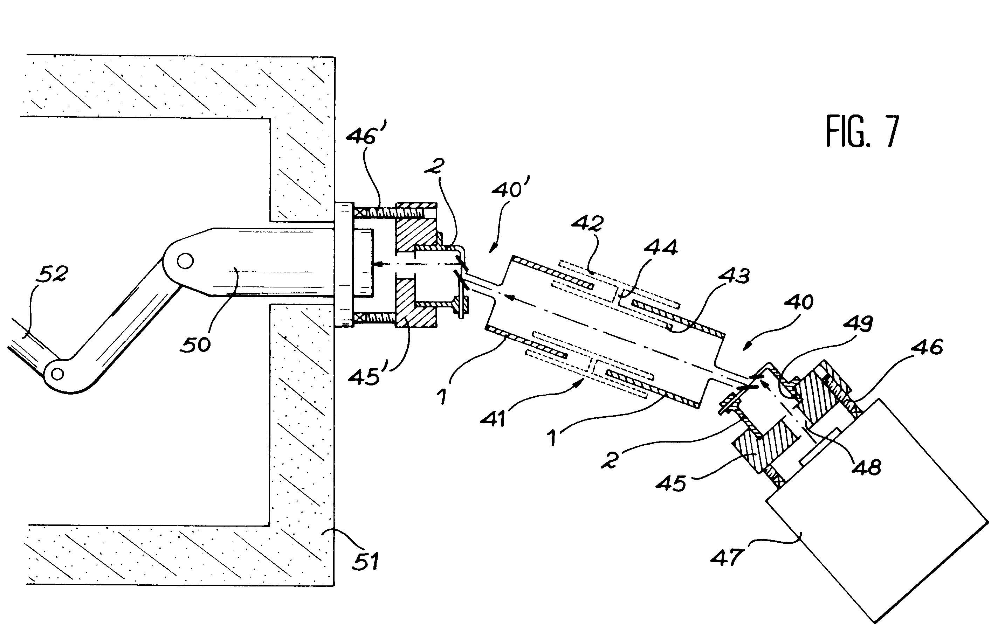

La figure 7 représente une application possible de l'invention. Il s'agit d'un raccord optique constitué de deux cardans 40 et 40′ tels que celui décrit aux extrémités de ce raccord optique et d'un module de translation 41 intercalé entre les deux cardans 40 et 40′. Le module de translation 41 se compose de deux cylindres coaxiaux 42 et 43 réunis par un anneau central 44 et entre lesquels coulissent deux des arbres creux de ces cardans, par exemple les deux premiers arbres 1.

Le second arbre 2 de l'un des cardans 40 est enfoncé dans une empreinte circulaire 49 de même diamètre d'un socle 45 lié par des vis de réglage 46 à un laser au dioxyde de carbone 47. Le socle 45 est pourvu d'un évidement 48 prolongeant l'empreinte circulaire 49 pour le passage du faisceau lumineux. Celui-ci passe ensuite à l'intérieur du cardan 40, du module de translation 41 puis du second cardan 40′ dont le second arbre 2 est de même installé dans un socle 45′ semblable au précédent et qui est fixé par des vis de réglage 46′ à l'arrière d'un robot 50 s'étendant à travers l'ouverture d'une cellule de protection biologique 51 dans laquelle sont entreposés des matériaux irradiés à découper en vue d'un démantèlement d'installation nucléaire.

Le robot 50 comprend à l'intérieur de la cellule 51 un bras 52 qui peut être pourvu de différents degrés de liberté de translation ou de rotation. Le faisceau lumineux est dévié à l'intérieur du bras 52 par d'autres miroirs suivant des dispositions appartenant à l'art connu et promené le long de lignes de découpe des pièces irradiées.

Le raccord optique peut être installé très rapidement et facilement entre le laser 47 et le robot 50 et ceci sans aucun réglage. Sa longueur est ajustée immédiatement en faisant coulisser les premiers arbres 1 dans le module de translation 41.

## Revendications

1. Articulation en joint de cardan (40, 40′) à la jonction de deux arbres creux concourants (1, 2) parcourus par un faisceau lumineux suivant deux axes de propagation (x₁, x₂), une première fourche (4) étant fixée à un premier arbre (1) et une charnière (6) pivotant dans la première fourche (4) suivant un premier axe de rotation du cardan (qq′), caractérisé par :
- une seconde fourche (11) pivotant sur le second arbre (2) suivant le second axe de rotation du cardan (pp′), la charnière (6) pivotant également dans la seconde fourche (11) ;
- un premier miroir (7) fixé à la charnière (6), disposé selon la bissectrice extérieure d'un premier angle (a₁) constitué par le second axe de rotation du cardan (pp′) et l'axe de propagation du faisceau (x₁) dans le premier arbre (1) ;
- un mécanisme de transmission (20 à 27) pour faire tourner la charnière (6) d'angles égaux à la moitié des angles de rotation de la première fourche (4) et du premier arbre (1) autour du premier axe de rotation du cardan (qq′), et maintenir ainsi la normale à la surface réfléchissante du premier miroir (7) suivant la bissectrice intérieure du premier angle (a₁) ;
- un second miroir (13) fixé au second arbre (2), disposé selon la bissectrice extérieure d'un second angle (a₂) constitué par le second axe de rotation du cardan (pp′) et l'axe de propagation du faisceau (x₂) dans le second arbre (2), la normale à la surface réfléchissante du second miroir (13) étant orientée suivant la bissectrice intérieure du second angle (a₂).

2. Articulation suivant la revendication 1, caractérisée en ce que le mécanisme est constitué d'une poulie menante (20) et d'une poulie menée (21) coaxiales ainsi que de deux poulies de renvoi (22, 23) fixées sur un arbre de renvoi (24, 24′), tournant dans un palier (25, 57) ménagé dans la seconde fourche (11), la poulie menante (20) étant fixée à la première fourche (4) et la poulie menée (21) à la charnière (6), et enfin de deux lames (26, 27) dont l'une est tendue entre la poulie menante et une poulie de renvoi et l'autre est tendue entre l'autre poulie de renvoi et la poulie menée.

3. Articulation suivant la revendication 2, caractérisée en ce que le palier est constitué d'un excentrique (25) dont la rotation dans la seconde fourche (11) déplace transversalement l'arbre de renvoi (24).

4. Articulation suivant l'une quelconque des revendications 2 ou 3, caractérisée en ce qu'une poulie (21) comprend une partie d'appui (32) de la lame associée (27) déformable de façon à faire varier le diamètre apparent de la poulie (21).

5. Articulation suivant la revendication 4, caractérisée en ce que la poulie déformable (21) se compose d'un noyau central (30), d'une console (31) et d'un flanc circonférentiel (32) entourant le noyau (30), le flanc (32) constituant la partie déformable, le flanc (32) et la console (31) étant encastrés dans le noyau (30), ainsi que d'une vis de pression (33) entre la console et une zone du flanc éloignée de l'encastrement, la lame (27) tendue entre la poulie déformable et une autre des poulies (23) étant discontinue et fixée à ses extrémités aux poulies entre lesquelles elle est tendue, un ressort (36) étant disposé de manière à tendre la lame discontinue (27).

6. Articulation suivant la revendication 1, caractérisé en ce que le mécanisme est constitué d'un pignon menant (20a) fixé à la première fourche (4) et engrenant avec un premier pignon (22a) de renvoi fixé à un arbre de renvoi (24′), ainsi que d'un second pignon de renvoi (23a), également fixé à l'arbre de renvoi (24′), qui engrène avec un pignon mené (21a) fixé à la charnière (6).

7. Articulation suivant l'une quelconque des revendications 1 à 6, caractérisée en ce que le second bras (2) comprend une partie en palier (9) recevant un pivot (10) de la seconde fourche (11), le pivot (10) étant coaxial au second axe de rotation (pp′) et le premier miroir (7) étant disposé entre le pivot (10) et le second miroir (13).

## Patentansprüche

1. Kreuzgelenk (40, 40′) für die Verbindung zweier, lichtübertragender Gelenkwellen (1, 2), die von einem Lichtbündel längs zweier Fortpflanzungsachsen (x₁, x₂) durchlaufen werden, wobei eine erste Gabel (4) an einer ersten Welle (1) befestigt ist und ein Scharnier (6) in der ersten Gabel (4) gemäß einer ersten Drehachse des Kreuzgelenkes (q, q′) verschwenkbar ist, gekennzeichnet durch:
- eine zweite Gabel (11), die an der zweiten Welle (2) gemäß der zweiten Drehachse des Kreuzgelenkes (pp′) verschwenkbar ist, wobei das Scharnier (6) ebenfalls in der zweiten Gabel (11) verschwenkbar ist;
- einen ersten Spiegel (7), der an dem Scharnier (6) befestigt ist, gemäß der äußeren Winkelhalbierenden eines ersten Winkels (a₁) angeordnet ist, der von der zweiten Drehachse des Kreuzgelenkes (pp′) und der Fortpflanzungsachse des Bündels (x₁) in der ersten Welle (1) gebildet ist;
- einen Übertragungsmechanismus (20 bis 27), um das Scharnier (6) um Winkel drehen zu lassen, die gleich der Hälfte der Drehwinkel der ersten Gabel (4) und der ersten Welle (1) um die erste Drehachse des Kreuzgelenkes (qq′) sind, und um auf diese Weise die Normale auf der reflektierenden Oberfläche des ersten Spiegels (7) längs der inneren Winkelhalbierenden des ersten Winkels (a₁) zu halten;
- einen zweiten Spiegel (13), der an der zweiten Welle (2) befestigt ist, entlang der äußeren Winkelhalbierenden eines zweiten Winkels (a₂) angeordnet ist, der von der zweiten Drehachse des Kreuzgelenkes (pp′) und der Fortpflanzungsachse des Bündels (x₂) in der zweiten Welle (2) gebildet ist, wobei die Normale auf die reflektierende Oberfläche des zweiten Spiegels (13) entlang der inneren Winkelhalbierenden des zweiten Winkels (a₂) ausgerichtet ist.

2. Gelenk nach Anspruch 1, dadurch gekennzeichnet, daß der Mechanismus gebildet ist von einer treibenden Scheibe (20) und einer getriebenen Scheibe (21), die koaxial sind, sowie von zwei Getriebescheiben (22, 23), die auf einer Getriebewelle (24, 24′) befestigt sind, die sich in einem Lager (25, 57) dreht, das in der zweiten Gabel (11) vorgesehen ist, wobei die treibende Scheibe (20) an der ersten Gabel (4) und die getriebene Scheibe (21) an dem Scharnier (6) befestigt ist, und schließlich von zwei dünnen Streifen (26, 27), von denen einer zwischen der treibenden Scheibe und einer Getriebescheibe gespannt ist und der andere zwischen der anderen Getriebescheibe und der getriebenen Scheibe gespannt ist.

3. Gelenk gemäß Anspruch 2, dadurch gekennzeichnet, daß das Lager von einem Exzenter (25) gebildet ist, dessen Drehung in der zweiten Gabel (11) die Getriebewelle (24) in Querrichtung verschiebt.

4. Gelenk nach irgendeinem der Ansprüche 2 oder 3, dadurch gekennzeichnet, daß eine Scheibe (21) einen Tragteil (32) für den verbundenen, dünnen Streifen (27) aufweist, der derart verformbar ist, daß der sichtbare Durchmesser der Scheibe (21) verändert wird.

5. Gelenk gemäß Anspruch 4, dadurch gekennzeichnet, daß die verformbare Scheibe (21) von einem mittleren Kern (30), einem Auslegerarm (31) und einem den Kern (30) umgebenden Umfangsflansch (32), wobei der Flansch (32) den verformbaren Teil bildet, der Flansch (32) und der Auslegerarm (31) in den Kern (30) eingebaut sind, sowie einerDruckschraube (33) zwischen dem Auslegerarm und einem Bereich des Flansches gebildet ist, der von demr Einbau entfernt ist, wobei deras zwischen der verformbaren Scheibe und einer anderen der Scheiben (23) gespannte, dünne Streifen unterbrochen ist und mit seinen Enden an den Scheiben befestigt ist, zwischen denen er gespannt ist, wobei eine Feder (36) derart angeordnet ist, daß der unterbrochene, dünne Streifen (27) gespannt wird.

6. Gelenk gemäß Anspruch 1, dadurch gekennzeichnet, daß der Mechanismus von einem treibenden Ritzel (20a), das an der ersten Gabel (4) befestigt ist und in ein erstes Getrieberitzel (22a) eingreift, das an einer Getriebewelle (24′) befestigt ist, sowie von einem zweiten Getrieberitzel (23a) gebildet ist, das ebenfalls auf der Getriebewelle (24′) befestigt ist und an einem getriebenen Ritzel (21a) angreift, das an dem Scharnier (6) befestigt ist.

7. Gelenk gemäß einem der Ansprüche 1 bis 6, dadurch gekennzeichnet, daß der zweite Arm (2) ein Lagerteil (9) umfaßt, das einen Drehzapfen (10) der zweiten Gabel (11) aufnimmt, wobei der Drehzapfen (10) koaxial zu der zweiten Drehachse (pp′) ist und der erste Spiegel (7) zwischen dem Drehzapfen (10) und dem zweiten Spiegel (13) angeordnet ist.

## Claims

1. Cardan joint articulation (40, 40′) at the junction of two concurrent hollow shafts (1, 2) through which a light beam runs along the two axes of propagation (x₁, x₂), a first fork (4) being fixed to a first shaft (1) and a hinge (6) pivoting in the first fork (4) about a first axis of rotation of the Cardan (qq′), characterized by:
- a second fork (11) pivoting on the second shaft (2) about the second axis of rotation of the Cardan (pp′), the hinge (6) also pivoting in the second fork (11);
- a first mirror (7) fixed to the hinge (6), located along the external bisector of a first angle (a₁) consisting of the second axis of rotation of the Cardan (pp′) and the axis of propagation of the beam (x₁) in the first shaft (1);
- a transmission mechanism (20 to 27) to make the hinge (6) turn through angles equal to half the angles of rotation of the first fork (4) and of the first shaft (1) about the first axis of rotation of the Cardan (qq′), and thus to keep the normal to the reflective surface of the first mirror (7) along the internal bisector of the first angle (a₁);
- a second mirror (13) fixed to the second shaft (2), located along the external bisector of a second angle (a₂) consisting of the second axis of rotation of the Cardan (pp′) and the axis of propagation of the beam (x₂) in the second shaft (2), the normal to the reflective surface of the second mirror (13) being oriented along the internal bisector of the second angle (a₂).

2. Articulation according to Claim 1, characterized in that the mechanism consists of a driving pulley (20) and of a driven pulley (21) which are coaxial, as well as of two return pulleys (22, 23) which are fixed to a return shaft (24, 24′) revolving in a bearing (25, 57) formed in the second fork (11), the driving pulley (20) being fixed to the first fork (4) and the driven pulley (21) to the hinge (6), and finally of two strips (26, 27) one of which is stretched between the driving pulley and one return pulley, and the other of which is stretched between the other return pulley and the driven pulley.

3. Articulation according to Claim 2, characterized in that the bearing consists of an eccentric (25) the rotation of which in the second fork (11) transversely displaces the return shaft (24).

4. Articulation according to either one of Claims 2 and 3, characterized in that one pulley (21) comprises a deformable part (32) on which the associated strip (27) bears, so as to cause the apparent diameter of the pulley (21) to vary.

5. Articulation according to Claim 4, characterized in that the deformable pulley (21) is composed of a central core (30), of a bracket (31) and of a circumferential flank (32) surrounding the core (30), the flank (32) constituting the deformable part, the flank (32) and the bracket (31) being built into the core (30), as well as of a binding screw (33) between the bracket and a zone on the flank remote from the zone of building-in, the strip (27) stretched between the deformable pulley and another of the pulleys (23) being discontinuous and fixed at its ends to the pulleys between which it is stretched, a spring (36) being located so that it stretches the discontinuous strip (27).

6. Articulation according to Claim 1, characterized in that the mechanism consists of a driving pinion (20a) fixed to the first fork (4) and meshing with a first return pinion (22a) fixed to a return shaft (24′), as well as of a second return pinion (23a) also fixed to the return shaft (24′) which meshes with a driven pinion (21a) fixed to the hinge (6).

7. Articulation according to any one of Claims 1 to 6, characterized in that the second arm (2) comprises a bearing-shaped part (9) receiving a pivot (10) of the second fork (11), the pivot (10) being coaxial with the second axis of rotation (pp′) and the first mirror (7) being located between the pivot (10) and the second mirror (13).
